# EUROPÄISCHE PATENTSCHRIFT

(11) **EP 1 762 707 B1**
(45) Veröffentlichungstag und Bekanntmachung des Hinweises auf die Patenterteilung: **19.08.2015**
(21) Anmeldenummer: 05450152.3
(22) Anmeldetag: 13.09.2005
(51) Int. Cl.: F01L 3/06, F01L 3/00

(54) **Gasmotor**
Gas engine
Moteur à gaz

(43) Veröffentlichungstag der Anmeldung: 14.03.2007
(73) Patentinhaber: Forschungsgesellschaft für Verbrennungskraftmaschinen und Thermodynamik mbH, 8010 Graz (AT)
(72) Erfinder: Beran, Robert Dr., 8010 Graz (AT); Winter, Hubert Dr., 8042 Graz (AT)
(74) Vertreter: Patentanwaltskanzlei Hübscher

(56) Entgegenhaltungen:
- DE-A1- 1 576 779
- DE-A1- 3 934 883
- DE-C- 93 759

## Beschreibung

Die Erfindung bezieht sich auf einen Gasmotor mit wenigstens einem Zylinder, dessen Zylinderkopf zumindest einen über ein Einlaßventil steuerbaren Einlaßkanal aufweist, der unmittelbar vor dem Einlaßventil an eine Gaszufuhrleitung angeschlossen ist.

Wie bei anderen Verbrennungsmotoren kommt es auch bei Gasmotoren auf ein möglichst homogenes, zündfähiges Gemisch im Brennraum an, um eine gute Verbrennung mit hohem Wirkungsgrad, hoher Leistung und niedrigen Emissionen zu erreichen. Inhomogene Zylinderladungen führen zu einer verstärkten Klopfneigung und aufgrund der stark nichtlinearen Temperaturabhängigkeit der Stickoxidbildung zu hohen Stickoxidemissionen. Damit in einfacher Weise für ein homogenes Gemisch im Brennraum gesorgt werden kann, ist es bekannt, für eine frühzeitige Gemischbildung zu sorgen, so daß sich dann aufgrund der vergleichsweise langen Ansaugstrecke vom Mischer bis in den Brennraum ein gleichmäßiges Gas-Luftgemisch einstellt. Nachteilig bei einer solchen frühzeitigen Gemischbildung ist allerdings, daß die vergleichsweise große Menge an zündfähigem Gemisch in der Saugstrecke nicht nur eine Gefahrenquelle darstellt, sondern auch eine entsprechende Trägheit hinsichtlich der Motorsteuerung mit sich bringt. Dazu kommt, daß bei wasserdampfhaltigen Gasen eine Kondenswasserbildung zu berücksichtigen ist. Diese Nachteile werden bei einer Gaszuleitung unmittelbar vor dem Einlaßventil vermieden, so daß sich eine schnellere Motorsteuerung mit kürzeren Totzeiten ergibt, und zwar unter energetisch günstigen Verhältnissen, wenn bei aufgeladenen Gasmotoren das Gas bereits unter Druck dem Einlaßkanal zugeführt wird. Diese Vorteile werden allerdings mit einer unzureichenden Gemischbildung erkauft, die ein nur wenig homogenes Gemisch im Brennraum zur Folge hat.

Zur Bereitstellung eines gleichmäßigen Gas-Luftgemisches für Gasmotoren ist es außerdem bekannt (AT 133 395 B) ein Mischventil einzusetzen, über das die Gemischzufruhr zum Zylinder gesteuert wird. Dieses Mischventil besteht aus einem Gas- oder Lufteinlaß, der von einer Luft- bzw. Gaszufuhr konzentrisch umschlossen wird, in der der Einlaß stirnseitig mündet. Durch eine Mischwand im Bereich der Vereinigung der zu mischenden Gas- und Luftströme wird die Vermischung dieser Ströme unterstützt, wobei die Strömungsquerschnitte durch gemeinsam betätigbare, als Schieber und Ventil ausgebildete Steuerorgane gesteuert werden, und zwar in Abhängigkeit von einem den Gemischaustritt aus dem Mischventil steuernden Ventilkörper, über dessen Spindel auch die beiden Steuerorgane verstellt werden. Diese konstruktiv aufwendigen Mischventile müssen außerhalb des Zylinderkopfes angeordnet werden, so daß sich wiederum eine vergleichsweise träge Motorsteuerung über diese Mischventile ergibt.

Der Erfindung liegt somit die Aufgabe zugrunde, einen Gasmotor der eingangs geschilderten Art mit einfachen konstruktiven Mitteln so auszugestalten, daß eine gute Gemischbildung trotz einer Gaszufuhr unmittelbar vor dem Einlaßventil sichergestellt werden kann.

Dokument DE 93759 C offenbart ein Mischventil für einem Gasmotor.

Die Erfindung löst die gestellte Aufgabe dadurch, daß zwischen der Gaszufuhrleitung und dem Einlaßkanal eine Gasverteilereinrichtung für einen über den Umfang des Einlaßkanales verteilten Gaseintritt vorgesehen ist.

Da die Gaszufuhr zum Einlaßkanal aufgrund der vorgesehenen Gasverteilereinrichtung nicht einseitig in einem beschränkten Umfangsbereich, sondern über den Umfang des Einlaßkanales verteilt erfolgt, kann ohne zusätzliche Maßnahmen eine vorteilhafte Gemischbildung sichergestellt werden, die für ein homogenes Gemisch im Brennraum sorgt. Die hohe Strömungsgeschwindigkeit im Bereich des Ventilspaltes des Einlaßventiles kann nämlich mit den im Ventilbereich auftretenden Turbulenzen zu einer homogenen Gemischbildung ausgenützt werden, wenn für eine über den Umfang gleichmäßige Gaszufuhr über die Gasverteilereinrichtung gesorgt wird.

Eine über den Umfang des Einlaßkanales ausreichend verteilte Gaszuführung könnte durch über den Umfang verteilte Anschlußbohrungen erreicht werden, so daß die Gaszufuhr in über den Umfang verteilte Teilströme aufgeteilt wird. Einfachere Konstruktionsverhältnisse ergeben sich allerdings, wenn die Gasverteilereinrichtung aus einer auf der Innenseite des Einlaßkanales vorgesehenen, über wenigstens eine Anschlußleitung mit der Gaszufuhrleitung verbundenen Ringnut besteht, die zusätzlich die Möglichkeit eröffnet, eine über den Umfang des Einlaßkanales gleichmäßige Gaszufuhr vorzusehen, so daß für eine homogene Gemischbildung im Bereich des Einlaßventiles besonders günstige Voraussetzungen geschaffen werden.

Die über den Umfang des Einlaßkanales verteilte Gaszuführung mit Hilfe der vorgesehenen Gasverteilereinrichtung, die im Zusammenhang mit den Strömungsverhältnissen im Bereich des Einlaßventiles die angestrebte homogene Gemischbildung sicherstellt, macht das Vorsehen von dem Einlaßventil vorgeordneten Mischstrecken überflüssig, so daß die Gasverteilereinrichtung unmittelbar vor dem Ventilspalt des Einlaßventiles angeordnet werden kann. Damit entfallen alle mit solchen Mischstrecken verbundenen Nachteile, ohne auf ein homogenes Gemisch im Brennraum verzichten zu müssen.

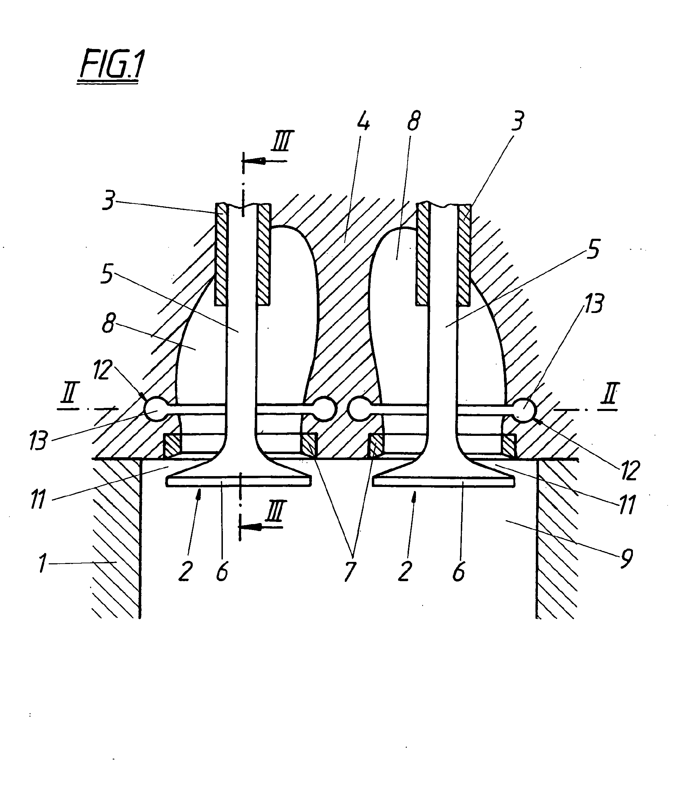

In der Zeichnung ist der Erfindungsgegenstand beispielsweise dargestellt. Es zeigen
- Fig. 1: einen Zylinderkopf eines erfindungsgemäßen Gasmotors mit zwei Einlaßventilen ausschnittsweise in einem schematischen Längsschnitt durch die Einlaßventile,
- Fig. 2: einen Schnitt nach der Linie II-II der Fig. 1 und
- Fig. 3: einen Schnitt nach der Linie III-III der Fig. 1.

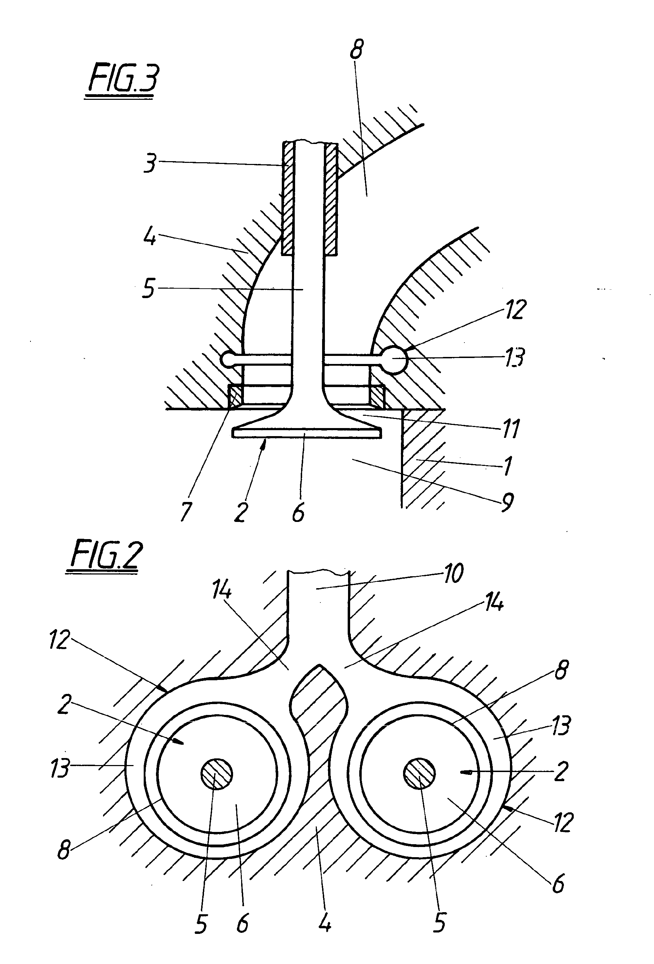

Der Gasmotor gemäß dem dargestellten Ausführungsbeispiel weist je Zylinder 1 zwei Einlaßventile 2 auf, die je aus einem in einer Führung 3 des Zylinderkopfes 4 axial verschiebbar gelagerten Ventilstößel 5 bestehen, dessen Ventilteller 6 mit einem Ventilsitz 7 am ausgangsseitigen Ende eines Einlaßkanales 8 zusammenwirkt. Der über den Einlaßkanal 8 in den Brennraum 9 des Zylinders 1 angesaugten Luft wird Gas als Brennstoff zugeführt. Zu diesem Zweck ist zwischen einer in der Fig. 2 angedeuteten Gaszufuhrleitung 10 und den Einlaßkanälen 8 unmittelbar vor dem Ventilspalt 11 des zugehörigen Einlaßventils 2 eine Gasverteilereinrichtung 12 für einen über den Umfang des Einlaßkanales 8 verteilten Gaseintritt vorgesehen. Diese Gasverteilereinrichtung 12 besteht gemäß dem Ausführungsbeispiel jeweils aus einer auf der Innenseite des Einlaßkanales 8 vorgesehenen Ringnut 13, die gegen den Einlaßkanal hin offen ausgebildet und über eine Anschlußleitung 14 mit der Gaszufuhrleitung 10 verbunden ist. Da die Ringnut 13 einen mit wachsender Entfernung von der Anschlußleitung 14 abnehmenden Strömungsquerschnitt aufweist, kann bei einer entsprechenden Gasbeaufschlagung der Gaszufuhrleitung 10 für eine über den Umfang des jeweiligen Einlaßkanales 8 gleichmäßige Gaszuführung gesorgt werden.

Das über den Umfang des Einlaßkanales 8 verteilt in den Einlaßkanal Einlaßkanal 8 strömende Gas wird mit der angesaugten Luft mitgerissen und durch den Ventilspalt 11 in den Brennraum 9 gefördert. Aufgrund der hohen Strömungsgeschwindigkeit im Bereich des Ventilspaltes 11 und der hohen Turbulenzen beim Austritt des Gas-Luftgemisches aus dem Ventilspalt 11 in den Brennraum 9 wird unter der Voraussetzung einer über den Umfang des Einlaßkanales 8 verteilten Gaszuführung eine innige Vermischung der Luft mit dem Gas erzielt und damit ein homogenes Gasluftgemisch im Brennraum 9 sichergestellt. Es zeigt sich somit, daß die jedem Einlaßventil 2 unmittelbar vorgeordnete Gasverteilereinrichtung 12 für einen über den Umfang des Einlaßkanales 8 verteilten Gaseintritt eine wesentliche Voraussetzung für ein homogenes Gemisch im Brennraum 9 und in Abhängigkeit davon für eine rasche Verbrennung mit hohem Wirkungsgrad, hoher Leistung und niedrigen Emissionen darstellt.

## Patentansprüche

1. Gasmotor mit wenigstens einem Zylinder, dessen Zylinderkopf zumindest einen über ein Einlaßventil steuerbaren Einlaßkanal aufweist, der unmittelbar vor dem Einlaßventil an eine Gaszufuhrleitung angeschlossen ist, **dadurch gekennzeichnet, daß** zwischen der Gaszufuhrleitung (10) und dem Einlaßkanal (8) eine Gasverteilereinrichtung (12) für einen über den Umfang des Einlaßkanales (8) verteilten Gaseintritt vorgesehen ist.

2. Gasmotor nach Anspruch 1, **dadurch gekennzeichnet, daß** die Gasverteilereinrichtung (12) aus einer auf der Innenseite des Einlaßkanales (8) vorgesehenen, über wenigstens eine Anschlußleitung (14) mit der Gaszufuhrleitung (10) verbundenen Ringnut (13) besteht.

3. Gasmotor nach Anspruch 1 oder 2, **dadurch gekennzeichnet, daß** die Gasverteilereinrichtung (12) unmittelbar vor dem Ventilspalt (11) des Einlaßventiles (2) vorgesehen ist.

## Claims

1. Gas engine having at least one cylinder, the cylinder head of which has at least one inlet duct which can be controlled via an inlet valve and which is connected to a gas supply line directly upstream of the inlet valve, **characterised in that** between the gas supply line (10) and the inlet duct (8) a gas distribution device (12) is provided for an entry of gas distributed over the periphery of the inlet duct (8).

2. Gas engine as claimed in claim 1, **characterised in that** the gas distribution device (12) consists of an annular groove (13) provided on the inside of the inlet duct (8) and connected via at least one connection line (14) to the gas supply line (10).

3. Gas engine as claimed in claim 1 or 2, **characterised in that** the gas distribution device (12) is provided directly upstream of the valve clearance (11) of the inlet valve (2).

## Revendications

1. Moteur à gaz avec au moins un cylindre dont la culasse présente au moins un canal d'admission, pouvant être commandé par l'intermédiaire d'une soupape d'admission, qui est raccordé directement avant la soupape d'admission à un conduit d'amenée de gaz, **caractérisé en ce qu'**entre le conduit d'amenée de gaz (10) et le canal d'admission (8), il est prévu un dispositif de distribution de gaz (12) pour une admission du gaz répartie sur la périphérie du canal d'admission (8).

2. Moteur à gaz selon la revendication 1, **caractérisé en ce que** le dispositif de distribution de gaz (12) est composé d'une rainure annulaire (13) reliée au conduit d'amenée de gaz (10) par le biais au moins d'un conduit de raccordement (14) prévu sur le côté intérieur du canal d'admission (8).

3. Moteur à gaz selon la revendication 1 ou 2, **caractérisé en ce que** le dispositif de distribution de gaz (12) est prévu immédiatement en amont de la fente de soupape (11) de la soupape d'admission (2).
